(19) Europäisches Patentamt
European Patent Office
Office européen des brevets

(11) Publication number: 0 022 666 A1

# (12) EUROPEAN PATENT APPLICATION

(21) Application number: 80302353.0

(22) Date of filing: 10.07.80

(51) Int. Cl.³: **A 01 N 25/00**, A 01 N 25/24, A 01 N 25/30, A 01 N 25/32, A 01 N 33/12, A 01 N 43/40, A 01 N 57/20

(30) Priority: **11.07.79 GB 7924152**
**26.04.80 GB 8013865**
**12.05.80 GB 8015580**

(43) Date of publication of application: **21.01.81**
**Bulletin 81/3**

(84) Designated Contracting States: **AT BE CH DE FR IT LI LU NL SE**

(71) Applicant: **SAMPSON, Michael, James, 9 Mill Close, Chichester Sussex (GB)**

(72) Inventor: **SAMPSON, Michael, James, 9 Mill Close, Chichester Sussex (GB)**

(74) Representative: **Crampton, Keith John Allen et al, D. Young & Co. 10 Staple Inn, London WC1V 7RD (GB)**

## (54) Pesticide compositions which contain a surface-active agent and method of applying them to plants.

(57) The effect of certain agricultural chemicals is improved by co-administration of them with one or more additives that modify the uptake of the chemical by modifying physico-chemical properties of the leaf or that alter the physical relationship between the agricultural chemical and the leaf surface such that the uptake of the agricultural chemical is altered beneficially, e.g. by temporarily holding the agricultural chemical in a layer on the leaf surface during a period when it is not needed by the plant. Compositions contain one or more of the agricultural chemicals and one or more of the additives, and the harvest of a given crop can be improved by applying it to one or more of the agricultural chemicals and one or more of the additives simultaneously or within up to 15 days of one another. The compositions may be made up with purgatives or emetics to reduce toxicity.

EP 0 022 666 A1

TITLE MODIFIED
see front page



ENGINEERING IMPROVED CHEMICAL PERFORMANCE IN PLANTS

This invention relates to agricultural chemicals, which term is used herein to mean fungicides, herbicides, insecticides, nematicides and plant growth regulators, and to methods of using them and compositions containing them.

The present invention is concerned with altering the performance of such chemicals. Conventional approach to this involves altering the chemical structure to a greater or lesser degree without altering the class or basic chemical type to which the compound belongs, and/or altering the physico-chemical properties of the formulation containing the chemical, e.g. by the addition of chemicals to stick the agricultural chemical to the target organism or to improve the rainfastness of the agricultural chemical. The literature (including patents) is full of examples of how the conventional approach may be carried out. In particular it is known that addition of one or more wetting agents (also called surfactants or surface-active agents) can enhance the effect of many agricultural chemicals when used at rates that lower the surface tension of the spray solution and enable it to spread more effectively over leaf surfaces (particularly where these are waxy).

In addition, within the patent literature there are

reports of encapsulated agricultural chemicals that slowly release their contents.

This invention is based on the discovery that the efficiency of agricultural chemicals, especially the growth-regulator Chlormequat (chlorocholine chloride) can be markedly improved by the use of surfactants at levels far higher than are required to reduce surface tension as hereinbefore described, and/or by the use of a coating agent as hereinafter defined. In International Patent Application No. PCT/GB 79/00050, the use of Chlormequat in association with certain metabolic additives is described for purposes including

(1) in Zea Mays (Maize), increase in yield;

(2) in Oil Seed Rape, the increase in yield and control of lodging;

(3) in Sugar Beet, increase in the proportion of sugar within the beet and in the yield of roots, and control of bolting (early seed production);

(4) in Potatoes, increase in yield, uniformity of tuber size and increase in the strength of tuber attachment to the plant to facilitate harvesting;

(5) in Carrots, Radishes, Turnips and Swedes, increase in yield and uniformity of root size;

(6) in Beans - (dry and green runner) and other Pulses, increase in yield.

Chlormequat, in combination with the additives described in Application No. PCT/GB 79/0050, is applied as a spray solution using typically 45 - 112.5 litres of water per hectare where the application is from the air or from a controlled droplet applicator and at 157.5 - 1125 litres per hectare from conventional sprayers. The application time may be from shortly after crop emergence to some two weeks before harvesting. In root crops a preferred time would be at or shortly before the commencement of tuber initiation (potato) or root swelling (other root crops). In cereals the preferred time is from crop emergence until the emergence of the ear.

At high levels surfactants may physically modify the

structure of the outer walls of plant cells and leaf surfaces and hence physically modify the structure of a plant leaf such that an agricultural chemical may penetrate it better. Suitable surfactants include but are not limited to the following:

(1) condensation products of ethylene oxide with fatty alcohols such as oleyl alcohol and cetyl alcohol, with alkyl phenols such as octylphenol, nonylphenol and octylcresol;

(2) partial esters derived from long chain fatty acids and hexitol anhydrides;

(3) condensation products of such partial esters (2) with ethylene oxide;

(4) Lecithins;

(5) sodium and calcium salts of polyacrylic acids and lignin-sulphonic acids;

(6) fatty acid esters of glycerol, sorbitan, sucrose or pentaerythritol and condensates of these with ethylene oxide and/or propylene oxide;

(7) quaternary salts and condensates of ethylene oxide with amines;

(8) substances sold under the Trade Marks Ethomeen, Ethoduomeen, Duoquod, Arquad, Lissapol, Cirrasol, Tween 20, Triton X-100, Citowett and Agral;

(9) tall oil; and

(10) substances sold under the trivial chemical names sodium lauryl sulphate, amine salts of sulphated fatty alcohols, alkyl phenol ethylene oxide condensate, alkylated aromatic sodium sulphonate, and sodium dodecylbenzene sulphonate.

The concentration of such surfactants in the final spray solutions applied in conventional practice to plants is from 0.01 to 0.025% for crops not possessing a waxy surface, e.g. cereals, and up to 0.05% for crops possessing a waxy surface, e.g. Brussel sprouts. Such solutions have been considered to give maximum benefit in farm use. When proceeding in accordance with the present invention, the final concentration in the applied solution is from 0.075 to 5%, preferably 0.75 to 2.5%. The above concentrations are w/v for solid surfactants and v/v

for liquid surfactants.

The addition of a coating agent to an agricultural chemical, whether or not a surfactant is added, can be beneficial for a number of reasons. Thus, certain plant-growth regulators, e.g. chlormequat (chlorocholine chloride), mepiquat chloride and ethopon, and certain herbicides, e.g. glyphosate, which are water-soluble and cannot bind to the leaf surface before uptake, may be washed from the leaf by rain before they become effective. To delay application of the chemical because of showery conditions may mean that good growing conditions, under which such chemicals are most effective, no longer exist and the crop cannot therefore be usefully treated. Moreover, many fungi, such as the causal organism of eyespot disease, grow better under showery conditions, which tend to wash off any applied fungicide. It is therefore particularly valuable to be able to incorporate into a pesticide formulation or to use in a tank mixture with it (agricultural chemicals normally being applied in a large volume of water) a coating agent, i.e. a chemical that seals it to the leaf and makes the chemical resistant to rain or artificial irrigation. This can make it possible to apply chlormequat or mepiquat chloride to cereal crops in autumn, when it is more effective than in spring, when it is normally applied. Furthermore, by using a coating agent, two or more chemicals may be usefully applied at the appropriate time for the earliest of the group while the activity is maintained in those required later until such times as it is required. For example it may be required to apply a herbicide before a fungicide application is economically desirable. By use of a coating as hereinbefore described both may be applied at the same time with considerable saving in costs.

Among coating agents that can be used in accordance with the present invention, either as such or in solution or emulsion, are the following:

(1) di-1-*p*-menthene (a terpene sold under the trade names of Miller Gard, Vapor Gard and Miller Aide), which is especially preferred;

(2) acrylic polymers and copolymers, e.g. polyacrylic acid, polyacrylamide, polyacrylonitrile, poly(methyl methacrylate) and poly(ethyl acrylate/butyl acrylate);

(3) cellulose ethers, e.g. hydroxethyl cellulose and sodium carboxymethyl cellulose;

(4) cellulose esters, e.g. methyl cellulose;

(5) epoxy resins, e.g. those sold under the Trade Marks Epikote 205, Epikote 828 and Eipkote 1001;

(6) hydrocarbon resins, e.g. petroleum resins, such as Hercules A 100;

(7) polyester resins;

(8) polyether resins;

(9) polyamide resins;

(10) rubbers, e.g. natural rubber, polyurethane, butyl rubber, nitrile rubber, polychloroprene and rubber oil emuline;

(11) silicone resins and polymers;

(12) styrene polymers, e.g. polystyrene and styrene/butadiene copolymer;

(13) thermosetting polymers, e.g. melamine-formaldehyde copolymer, phenol-formaldehyde resins and urea-formaldehyde resins;

(14) vinyl polymers, e.g. polyvinyl acetate, polyvinyl alcohol, polyvinyl butyral, polyvinyl pyrrolidone, poly(vinylacetate/vinyl chloride) and poly(vinyl acetate/acrylate; and

(15) natural drying oils, with or without metal accelerators, e.g. linseed and linseed/tung oils and linoleic and linolinic acids.

These coating agents are applied in from 2 - 10 gallons per acre (22.5 - 112.5 litres per hectare) of water using aerial application or controlled droplet application and from 10 - 500 gallons per acre (112.5 - 5625 litres per hectare) using conventional ground spray equipment. The application rate is from 250 ml to 62 litres of the coating agent per sprayed hectare of crop. Two or more such coating agents in the same or different classes may be used together.

This invention provides an agricultural formulation comprising an agricultural chemical as hereinbefore defined

together with a surfactant in a quantity such that the amount is at least 0.075% in a solution containing the agricultural chemical ready for application to plants, and/or a coating agent of the type described. Such formulations may be in concentrate form, needing addition of, for example, water to make them ready for use. This invention also provides a method of applying an agricultural chemical to a target plant, in which a surfactant in the above mentioned quantity and/or coating agent of the type herein described is also applied either simultaneously with the agricultural chemical or not more than fifteen days (preferably 10 days) before or after. Separate application of coating agent and agricultural chemical can reduce the tendency of certain chemicals to have their effectiveness reduced by their being bound strongly to the coating agent, while sealing them usefully to the plant. Additionally the coating can form a dividing layer between products that, if used in combination, including their spraying within 2 - 3 weeks of one another, could react together either to reduce activity or to damage the crop, e.g. difenzoquat and MCPA (not ester-formulated).

This technique may also be used to seal to the leaf a chemical that it is desired will penetrate the plant, such as a growth regulator or systemic fungicide, while keeping away from the leaf surface another chemical that it is desired to keep out of the leaf since its penetration would rapidly degrade the chemical to non-effective or even crop-damaging products or would reduce its effectiveness by removing it from the leaf surface when that is the area where its presence is required.

When the application is simultaneous, the agricultural chemical and the surfactant and/or coating agent may be supplied in a single formulation or may be mixed in situ in a spray or other chemical-applying apparatus.

The surfactants and/or coating agents are herein referred to as "Additives".

The use of compositions in accordance with the present invention can enhance the effectiveness of chlormequat (also called chlorocholine chloride, β-chloroethyl trimethylammonium

chloride and CCC) as mentioned above. Such compositions may also be beneficially used with other plant growth regulators including auxins, gibberellins and ethephon and mixtures of these. The use of high level of surfactants and/or coating agents in accordance with this invention has a very general property on the uptake of agricultural chemicals by plant leaves, such that the activity of a wide range of agricultural chemicals may be beneficially enhanced, in the case of surfactants by a greater amount than would be expected from their use for reducing surface tension alone, especially at temperatures below 10°C.

A further aspect of this invention is the use of the surfactants in conjunction with the coating agents to produce a further enhancement of activity.

Although it is beneficial for a surfactant to be used with a coating agent, such coating agents may be used alone to hold an agricultural chemical onto the leaf of a crop plant during a period when there is no growth and/or necessity for the chemical. An example of such a period would be during the months of December and January in the U.K. where there is little plant growth and fungal diseases are not developing. Thus a growth regulator as hereinbefore described and/or a fungicide may be applied in combination with a coating agent or the said coating agent may be applied to the plant within fifteen days of the application of the agricultural chemical. On the return of Spring when the plant may beneficially use a growth regulator and/or the action of a fungicide against fungal disease becomes of importance, increasing air temperatures and/or increasing solar radiation break down the coating agent to free the trapped agricultural chemical. At this point in the utilisation of the agricultural chemical by the crop the presence of a surfactant contained also within the coating is especially beneficial: it can assist in the uptake of an agricultural chemical with less phytotoxicity (crop damage). Such phytoxicity could be increased in certain circumstances (such as high temperatures) by the wetting agent/surfactant combined only with the agricultural chemical). The use of a coating agent to preserve an agricultural chemical in position during what is effectively a dormant period, and its subsequent release with the return of growing conditions, is a novel and hitherto unexpected feature of such coating processes and is totally different from previously reported encapsulated materials.

In addition the coating agent may, either in combination with an agricultural chemical or when applied by itself, place a protective seal or layer over the crop plant such that it would be protected from a spray treatment with a late applied agricultural chemical capable of damaging it. Thus a crop could be coated before the emergence of certain weeds which could later be sprayed with a herbicide that would, without the previously applied coating, be damaging to the crop.

The coating agent may also serve to reduce loss of water by transpiration and thus check wilting, and prevent frost damage, thus avoiding possible physiological or other damage to the crop that makes it more susceptible to attack by fungi and or insect pests. A synergistic effect may therefore be obtained through the use of the coating agent and a fungicide and/or insecticide.

The action of agricultural chemicals including growth regulators can be reduced by wilting, since wilted leaves take up chemicals poorly, and by frost damage. A wilted leaf may additionally present a poorer target for a spray since it will tend to hang downwards. Thus a beneficial combination of chemical and coating agent (possibly applied before the chemical) may be obtained.

Use of a coating agent may also reduce the accuracy in a necessary timing of application. As is known, application of certain agricultural chemicals such as growth regulators require application to be made at a precise stage of crop development. This stage may be short lived and difficult for the farmer to identify: even if it is identified correctly, the weather may prevent a timely application. The use of the coating agent may enable the product to go on more conveniently during a

relatively lengthy period before the time at which the chemical would otherwise have required application.

In yet another aspect the coating agent hereinbefore described may be used either in combination with or applied after an application of an insecticide to reduce the hazard to beneficial insects such as bees and ladybirds that may alight on leaf surfaces but which do not eat leaf material.

All the surfactants can act as purgative agents and thus reduce the mammalian toxicity of an agricultural chemical with which they are formulated or with which a formulation containing these additives is mixed in the spray tank or before adding to the spray tank. This decrease in mammalian toxicity may be further enhanced by the addition of known purgatives and/or emetics including phenolphthalein, castor oil, ipecachuana and apomorphine.

It is known that an increase in the seeding rate of wheat, barley or oats of above some 1,000 seeds per sq. metre fails to increase the yield and at about this planting density yield per acre begins to become reduced. At 2,000 seeds per square metre this reduction is usually very marked. Although there are more ears, the average size of the ear is reduced by a greater factor at high planting densities. This reduction cannot be corrected by the addition of nutrients and/or irrigation water to the crop. For this reason barley, wheat and oats are normally planted at around 1 1/4 cwt of seed per acre (155 kg per hectare) with a variation on this of some 40% up or down.

The problem is seen as being a light-related one. However, the failure to produce a full sized (or approaching a full sized) ear is not simply a matter of the reduction in the total light energy available to the plants. The problem is related in substantial measure to the quality of light reaching the plants. The crop canopy screens off a very high proportion of light at the red end of the spectrum while allowing light at the far red end of the spectrum to pass through. Thus the more open (less densely planted) the crop is, the higher will be the ratio of far red to red light that falls over the total leaf

surface. This ratio affects the phytochrome systems of the plant which in turn determine the level of activity of hormones such as gibberellic acid. This will determine in large measure the size of the ear. By blocking the action of hormones capable of effecting this reduction, as for example gibberellic acid, ear size can be increased at high planting densities and the field more fully utilised including by the use of a broadcast crop. Thus grain production per acre may be increased.

For this purpose an application of chlormequat formulated with the combination of additives as disclosed in PCT Application PCT GB 79/00050 of from 0.25 to 5.0 kg. per hectare may be applied using up to 12,000 litres per hectare of water as a diluent. Such volume of water may be required to ensure penetration of the densely planted crop. Further improvement can be made by including a coating agent in the formulation, as in the present invention.

Other chemicals may be used for this purpose, including

1. Quaternary ammonium compounds of the formula $R-N(CH_3)_3-Y$ in which Y is a non-phytotoxic anion and R is a lower aliphatic radical (e.g. a $C_{1-8}$ or $C_{1-6}$ aliphatic radical) containing a non-ionizing nucleophilic group or atom, e.g. haloalkyl, alkylene, haloalkylene, cyanoalkyl, mercaptoalkyl, alkoxyalkyl, alkylthioalkyl or epithioalkyl. Such compounds are defined in more detail in U.S. Patent No. 3 156 554 and a specific example of such a compound is chlorocholine chloride, which is mentioned above.
2. Haloalkyl phosphonic acids (particularly β-haloalkylphosphoric acids and especially acids in which the halogen is chlorine) and compounds of the general formula

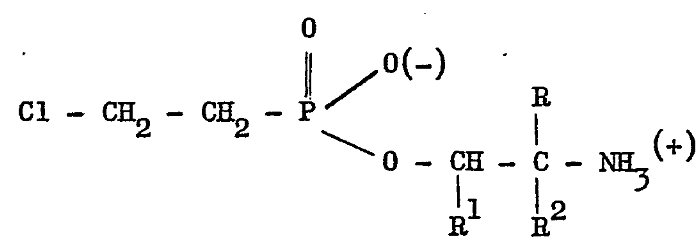

where each of R, $R^1$ and $R^2$, which are identical or different, is a hydrogen atom or a $C_{1-3}$ alkyl radical. Examples of non-phytotoxic anions are chloride, bromide, methosulphate,

sulphate and phosphate. A particularly useful example is 2-chloroethyl phosphonic acid (CEPA). Such compounds are defined in detail in U.K. Patent No. 1 483 915.

3. Chlorphonium chloride, i.e. tributyl -2,4 - dichlorobenzyl - phosphonium chloride.
4. Mepiquat chloride.
5. A diphenyl - 1H - pyrazolium salt of the formula

(1) 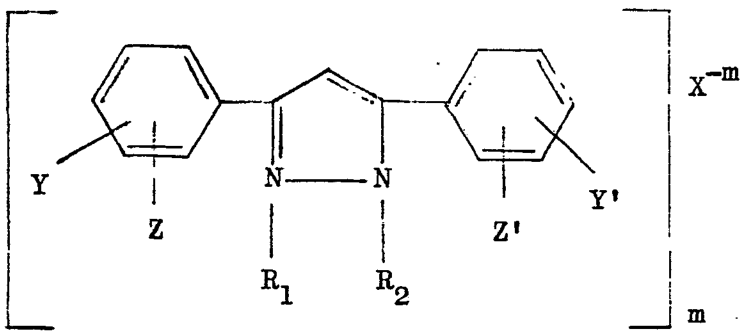

where $R_1$ is methyl; $R_2$ is $C_1$-$C_4$ alkyl; X is an anion with a charge of 1 to 3; Y, Y', Z and Z' are hydrogen, halogen, methyl or methoxy; and <u>m</u> is an integer from 1 to 3; provided that only one phenyl ring can be substituted on the carbon para to the pyrazolium ring with a substituent other than hydrogen. These compounds are defined in detail in U.K. Patent No. 1 466 634.

The use of such growth regulatory compounds as hereinbefore described (1 - 5 inclusive) may be particularly benefitted by their use in conjunction with those metabolic additives and combinations of additives as described in my prior International Patent Application No. PCT/GB 79/00050.

Of special importance is the ability of these additives as claimed in PCT/GB 79/00050 to improve the efficacy of a fungicide applied in combination with or up to 2 to 3 weeks before or after their application. This is because fungal disease is both more likely and when occurring more severe in densely planted crops than in those that are thinly planted.

The further addition of the coating agents has hereinbefore described either with or without the metabolic additives described in PCT/GB 79/00050 may be beneficial in combination

with those products hereinbefore described as possessing growth-regulatory properties.

Because of crop density, there can be considerable problems with adequate spray penetration as seeding rate is increased beyond the normal. This may be overcome by the use of the coating agents and and/or wetting agents as hereinbefore described at higher than normal levels.

By acting beneficially the hormone systems produced under dense planting conditions it becomes possible to usefully increase the seeding (planting) rate of wheat, barley or oats beyond the 1 3/4 cwt per acre (215 - 220 kg per hectare) normal planting rate up to 4 - 5 cwt per acre (500 - 625 kg per hectare) and in addition to usefully broadcast such high seed rates rather than to plant them in discreet drills which better allow light penetration than does broadcasting a crop.

This invention is not confined to wheat, oats and barley but may similarly be applied to all small grain cereals such as rice, rye, millet and sorghum, as well as to maize.

The following experimental data show effects produced by certain compositions and methods in accordance with the present invention and compare such effects with those of the prior art.

Examples of Additives

| Example No. | | % Concentration in final spray solution applied to plants |
|---|---|---|
| (1) | Alkyl phenol ethylene oxide condensate | 0.75 (v/v) |
| (2) | Alkyl phenol ethylene oxide condensate | 2.5 (v/v) |
| (3) | Lissapol | 1.0 (v/v) |
| (4) | Na lauryl sulphate | 0.5 (w/v) |
| (5) | Ethomeen | 1.5 (v/v) |
| (6) | Di - 1 - p - menthene | 0.3 (v/v) |
| (7) | Di - 1 - p - menthene | 1.0 (v/v) |
| (8) | D - 1 - p - menthene | 2.0 (v/v) |

| | | |
|---|---|---|
| (9) | Epikote 825 | 5.0 (v/v) |
| (10) | Methyl Cellulose | 2.5 (v/v) |
| (11) | Poly(vinyl acetate) | 1.5 (v/v) |

Concentrations are expressed as a % in the final spray solution applied to the plants.

Additives are defined as in the numbered examples above.

EXPERIMENT 1 (Spring Application)

This is a comparison of a standard commercially available formulation of Chloremequat, viz. Mandops Chlormequat 46, which contains 460 g Chlorocholine chloride per litre, to which has been added surfactant, viz. 250 ml. of alkyl phenol ethylene condensate per 1000 litres of spray solution, with Mandops Chlormequat 46 to which the additives as in:

(a) Example 1
(b) Example 6
(c) Example 1 + Example 6

have been added, with respect to their ability to shorten the stems of wheat.

| | | Stem Height (cm) | % Reduction |
|---|---|---|---|
| | Control (untreated) | 94.3 | - |
| | Chlormequat 46 | 84.0 | 10.9 |
| (a) | Chlormequat 46 + Additives as in Example 1 | 81.6 | 13.5 |
| (b) | Chlormequat 46 + Additives as in Example 6 | 79.8 | 15.4 |
| (c) | Chlormequat 46 + Additives as in Example 1 + Example 6 | 77.4 | 17.9 |

The application rate is equivalent to 1.6 kg. per hectare of chlorocholine chloride applied in 225 litre of water to Maris Huntsman wheat in March (during the late tillering stage). Results are expressed as an average of 250 measurements.

EXPERIMENT 2 (Autumn application)

This is a comparison of a standard commercially

available barley growth regulator (Mandops Barleyquat B) in Experiment 2A and a commercially available wheat growth regulator (Mandops Bettaquat B) in Example 2B, both based on the active ingredient chlormequat, to which has been added a coating agent, viz. 3 litres of di-1-p-menthene, in 1000 litres of spray, with respect to their respective abilities to increase the tiller numbers present in Sonja winter barley (Experiment 2A) and Maris Huntsman winter wheat (Experiment 2B) in the spring, following an application in late November, during the early tillering period.

EXPERIMENT 2A

| | % Increase in Tiller Numbers per plant on 30 April |
|---|---|
| Control (untreated) | - |
| Barleyquat B | + 15.5% |
| Barleyquat B + coating agent | + 45.2% |

EXPERIMENT 2B

| | % Increase in Tiller Numbers per plant on 10 May |
|---|---|
| Control (untreated) | - |
| Bettaquat B | 16.7 |
| Bettaquat B + coating agent | 59.3 |

The application rate to the barley was 2.3 litres per hectare of Mandops Barleyquat B, and to the wheat 1.8 litres per hectare of Mandops Bettaquat B, applied in 225 litres of water per hectare.

EXPERIMENT 3 (Barley)

This is a comparison of a standard commercially available formulation of chlormequat, viz. Mandops Chlormequat 46, to which has been added surfactant, viz. 250 ml of alkyl phenol ethylene oxide condensate per 1000 litres of spray solution; with Mandops Chlormequat 46 to which the additives as in:

(a) Example 1

(b) Example 6

(c) Example 1 + Example 6

have been added, with respect to their ability to strengthen the stems of barley plants.

| | | % Increase in Breaking Strain |
|---|---|---|
| | Control (Untreated) | - |
| | Chlormequat 46 | 6.8 |
| (a) | Chlormequat 46 + Additives as in Example 1 | 15.5 |
| (b) | Chlormequat 46 + Additives as in Example 6 | 13.9 |
| (c) | Chlormequat 46 + Additives as in Example 1 + Example 6 | 18.4 |

Application was made in May to Mazurka spring barley at the late tillering stage. The application rate was 1.6 kg. Chlorocholine chloride per hectare applied in 225 litres of water. The stem strength was measured by applying a force through a spring balance to the mid point of the first internode until breakage occurred. Results expressed as an average of 250 measurements.

EXPERIMENT 4 (Paraquat)

A standard commercially available formulation of paraquat via. Gramoxone to which has been added additional surfactant, viz. 500 ml of alkyl phenol ethylene condensate per 1000 litres of spray solution, was compared with Gramoxone to which additives in

(a) Example 2

(b) Example 7

(c) Example 2 + Example 7

have been added, with respect to their abilities to destroy an old sward.

Score 7 days after application:

0 = nil effect

10 = 100% kill

| | Score |
|---|---|
| Gramoxone | 6 |
| Gramoxone + Additives as in Example 2 | 7 |
| Gramoxone + Additives as in Example 7 | 7.5 |

| | Score |
|---|---|
| Gramoxone + Additives as in Example 2 + Example 7 | 9 |

The application rate was 1.1 kg. paraquat per hectare in 400 litres of water.

EXPERIMENT 5 (Glyphosate)

A standard commercially available formulation of glyphosate, viz. Roundup, to which has been added additional surfactant, viz. 250 ml. of alkyl phenol ethylene oxide condensate per 1000 litres of spray solution, was compared with Roundup to which additives as in:

(a) Example 2

(b) Example 7

(c) Example 2 + Example 7

had been added, with respect to their ability to kill a mixed weed population (grasses and broad leaf weeds) two weeks after spraying.

Score: 0 = nil effect

10 = 100% kill

| | Score |
|---|---|
| Roundup | 7 |
| Roundup + Additives as in Example 2 | 8 |
| Roundup + Additives as in Example 7 | 8 |
| Roundup + Additives as in Example 2 + Example 7 | 9 |

The application rate is equivalent to 0.5 kg. of glyphosate per hectare applied in 225 litres of water.

Example No.

(12) Mandops Chlormequat 46 (1000 ml) was combined with 200 ml of di-1-p-menthene, used at 4 litres per hectare and applied in 225 litres of water per hectare.

Example No.

(13) 1000 ml of Round-Up (glyphosate herbicide) + 50 ml of di-1-p-menthene was applied to grass weeds at 2 litres per hectare in 200 litres of water per hectare

(14) Mandops Bettaquat cereal growth regulator (1 litre) + 100 ml of di-1-p-menthene was applied at 2.8 litres per hectare in 225 litres of water to one hectare of wheat or oats.

(15) Mandops Barleyquat (1 litre) + 150 ml of di-1-p-menthene was applied at 3.5 litres per hectare in 225 litres of water per hectare to rye or barley.

Results

(A) 1 part by volume of Mandops Bettaquat + 0.112 parts by volume of di-1-p-menthene used at 2.8 litres in 225 litres of water was sprayed onto Bouquet wheat at the end of tillering. This is compared with shortening scored from 0-5.

(a) Mandops Chlormequat 46 (used at 3.5 litres in 225 litres of water)

(b) Mandops Bettaquat - 2.8 litres in 225 litres of water.

| | Chlormequat 46 | Bettaquat | Bettaquat + Di-1-p-Menthene |
|---|---|---|---|
| Sprayed | 4 | 5 | 5 |
| Sprayed and then 'washed' 40 minutes after | 1 - 2 | 2 | 4 - 5 |

Scored 0 = no action

5 = Bettaquat without washing.

(B) 1000 ml of Round-Up (glyphosate herbicide) + 60 ml of di-1-p-menthene, diluted in water (1 : 1000) was compared with Round-Up (diluted 1 : 1000) without di-1-p-menthene. Solutions were sprayed onto predominantly grass turf and after 60 minutes watered to the

equivalent of one inch (2.54 cm) of rain. In the case of Round-Up without di-l-p-menthene one plot was also given a similar rain treatment immediately after herbicide application.

| | Rain immediately | Rain after 1 hour | No rain for 2 days |
|---|---|---|---|
| Glyphosate + di-l-p-menthene | - | 9 | - |
| Glyphosate | 2 | 3 | - |
| Glyphosate | - | - | 10 |

Score 0: (no effect) to 10: glyphosate without rain for two days.

Scored after 14 days.

CLAIMS

1. A composition containing an agricultural chemical that is a fungicide, herbicide, insecticide, nematicide or plant-growth regulator, together with a surface-active agent in a quantity such that there will be at least 0.075% (v/v for a liquid and w/v for a solid surface-active agent) of it in a liquid containing the agricultural chemical at a dilution suitable for application to plants and/or a coating agent that acts to seal the agricultural chemical to the leaf of the plant.

2. A composition as claimed in Claim 1, in which the agricultural chemical is chlorocholine chloride, paraquat or glyphosate.

3. A composition as claimed in Claim 1 or 2, in which the quantity of surface-active agent is 0.75 to 2.5% (v/v for a liquid and w/v for a solid surface-active agent) in a liquid containing the agricultural chemical at a dilution suitable for application to plants.

4. A composition as claimed in any one of Claims 1 to 3, in which the surface-active agent comprises one or more of the following:

(1) condensation products of ethylene oxide with fatty alcohols such as oleyl alcohol and cetyl alcohol, with alkyl phenols such as octylphenol, nonylphenol and octylcresol;

(2) partial esters derived from long chain fatty acids and hexitol anhydrides;

(3) condensation products of such partial esters (2) with ethylene oxide;

(4) lecithins;

(5) sodium and calcium salts of polyacrylic acids and lignin-sulphonic acids;

(6) fatty acid esters of glycerol, sorbitan, sucrose or pentaerythritol and condensates of these with ethylene oxide and/or propylene oxide;

(7) quaternary salts and condensates of ethylene oxide with amines;

(8) tall oil; and

(9) substances sold under the trivial chemical names sodium lauryl sulphate, amine salts of sulphated fatty alcohols, alkyl phenol ethylene oxide condensate, alkylated aromatic sodium sulphonate, and sodium dodecylbenzene sulphonate.

5. A composition as claimed in any one of Claims 1 to 4, in which the coating agent is di-1-p-menthene, an acrylic polymer, a cellulose ether or ester, an epoxy resin, a hydrocarbon resin, a polyester resin, a polyether resin, a polyamide resin, a rubber, a silicone resin or polymer, a styrene polymer, a vinyl polymer, a thermosetting polymer, or a natural drying oil.

6. A composition as claimed in any preceding claim, that also includes a purgative or emetic and/or a second agricultural chemical, to decrease toxicity hazard to mammals.

7. A composition as claimed in any preceding claim in the form of a sprayable liquid.

8. A method of applying an agricultural chemical that is

a fungicide, herbicide, insecticide, nematicide or plant-growth regulator, characterised in that an additive or additives in the form of a surface-active agent in an amount sufficient to modify the physico-chemical structure of a plant surface and/or a coating agent that acts to seal the agricultural chemical to the leaf of the plant is also applied to the same locus as the agricultural chemical not more than fifteen days earlier than or more then fifteen days later than the agricultural chemical, whereby the desired effect of the agricultural chemical is enhanced, especially at temperatures below 10°C.

9. A method as claimed in Claim 8, in which the quantity of surface-active agent is 0.75 to 2.5% (v/v for a liquid and w/v for a solid surface-active agent) in a liquid containing the agricultural chemical at a dilution suitable for application to plants.

10. A method as claimed in Claim 8 or 9, in which the surface-active agent is as defined in Claim 4 and/or the coating agent is as defined in Claim 5.

11. A method as claimed in any one of Claims 8 to 10, in which the agricultural chemical is chlorocholine chloride and it is applied to wheat, oats or rye to improve the yield of the crop by shortening and/or strengthening the stem to control lodging and/or effecting beneficially the development of the grain bearing ear.

12. A method as claimed in any one of Claims 8 to 10, in which the agricultural chemical is chlorocholine chloride and it is applied to barley, maize, millet, sorghum or rice to improve the yield of the crop by shortening and/or strengthening the stem to control lodging and/or effecting beneficially the development of the grain-bearing ear.

13. A method as claimed in any one of Claims 21 to 25, in

which the agricultural chemical is a herbicide and is being applied to established weeds.

14. A method as claimed in any one of Claims 8 to 13, in which an agricultural chemical not containing an additive as defined in Claim 8 is applied not more than fifteen days before and not more than fifteen days after a mixture of an agricultural chemical and an additive as defined in Claim 8.

15. A method as claimed in any one of Claims 8 to 13, in which the application is made to plants not less than two weeks before the stage of plant growth or time of fungal or insect infestation at which the agricultural chemical would have been applied without the use of an additive or additives as claimed in Claim 8.

16. A method as claimed in any one of Claims 8 to 10, in which the agricultural chemical is chlorocholine chloride and the application is made during the autumn or winter months preceding the spring in which the growth regulator would normally have been applied.

17. A method as claimed in any one of Claims 8 to 10, in which the agricultural chemical is chlorcholine chloride and it is applied to

(1) Zea Mays (Maize) to increase the yield;
(2) Oil Seed Rape to increase the yield and control lodging;
(3) Sugar Beet to increase the proportion of sugar within the beet, and the yield of roots, and to control bolting;
(4) Potatoes to increase the yield, improve the uniformity of tuber size and increase the strength of tuber attachment to the plant to facilitate harvesting;
(5) Carrots, Radishes, Turnips or Swedes, to increase the yield and improve the uniformity of root size;
(6) Beans (dry and green runner) or other Pulses to increase the yield; or
(7) cereal crops to enable a higher density of seed to be sown.

European Patent Office

# EUROPEAN SEARCH REPORT

0022666

Application number

EP 80 30 2353

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | page 136, abstract 54380f Columbus, Ohio, USA M.L. LACY "Efficacy of two spray adjuvants in fungicidal protection of celery against septoria leafspot". & Plant Dis. Rep, 1974, 58(3), 232-4. -- | | |
| X | CHEMICAL ABSTRACTS, vol. 85, no. 25, December 20, 1976, page 130 abstract 187645j Columbus, Ohio, US D.C. FERREE et al. "Influence of spray adjuvants and multiple applications of benomyl and oil on photosynthesis of apple leaves", & Hort. Science 1976, 11(4) -- | 1,5,7, 8,10 | TECHNICAL FIELDS SEARCHED (Int. Cl. 3) |
| X | CHEMICAL ABSTRACTS, vol. 90, no.7, February 12, 1979. page 153, abstract 49545d Columbus, Ohio, US R.S. YOUNG: "Apple thinning with NAA and additives Nufilm - P and tween-20" & Proc. Plant growth regul. Work-group 1977, 4, 220-222. -- | 3-5, 7-10 | |
| X | FR - A - 2 337 998 (CELANESE) * Page 1, line 29 to page 3, line 9; page 5, lines 4-17; claims 1,4 * -- | 1,5,7, 8,10 | |

./.

European Patent Office

# EUROPEAN SEARCH REPORT

0022666

Application number

EP 80 30 2353



## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR - A - 2 358 831 (SANYO CHEMICAL INDUSTRIES)<br>* Page 1, line 35 to page 2, line 17; examples; claims *<br>-- | 1,2,5, 7,8,10 | |
| X | US - A - 2 262 454 (A.L. FLENNER)<br>* Claims *<br>-- | 1,3, 7-9 | |
| | FR - A - 2 379 979 (ICI)<br>* Claims *<br>---- | 6 | TECHNICAL FIELDS SEARCHED (Int. Cl. 3) |

0022666

European Patent Office

# EUROPEAN SEARCH REPORT

Application number
EP 80 30 2353

## DOCUMENTS CONSIDERED TO BE RELEVANT

| Category | Citation of document with indication, where appropriate, of relevant passages | Relevant to claim |
|---|---|---|
| X | W. VAN VALKENBURG: "Pesticide formulations", 1973, M. Dekker Inc. New York, US pages 387-439. * Page 398, last paragraph to page 401, paragraph 3 * -- | 1-4,7, 8,10 |
| X | JOURNAL OF AGRICULTURAL AND FOOD CHEMISTRY, vol. 12, 1964 Washington D.C. US L.L. JANSEN: "Relation of structure of ethylene oxide ether-type noxionic surfactants to herbicidal activity of water-soluble herbicides", pages 223- 227, * Figure 1 * -- | 1-4,7, 8,10 |
| X | JOURNAL OF THE SCIENCE OF FOOD AND AGRICULTURE, vol. 15, 1964 August London, GB C.G.L. FURMIDGE: "The incorporation of wetting agents in high-volume sprays" pages 542-550. * Page 549, paragraph 3 * -- | 1-4,7, 8,10 |
| X | CHEMICAL ABSTRACTS, vol. 66, no. 13, March 27, 1967, page 5124, nr. 54462h, Columbus, Ohio, US W. SMITH et al. "Interactions of several paraquat-surfactant mixtures", & Weeds, 15(1), 67-72 (1967) -- | 1-4,7, 10,13 |
| X | CHEMICAL ABSTRACTS, vol. 61, no. 12, December 7, 1964 column 15278g | 1,3,4, 7-10, 13 |

| CLASSIFICATION OF THE APPLICATION (Int. Cl.³) |
|---|
| A 01 N 25/00 25/24 25/30 25/32 33/12 43/40 57/20 |

| TECHNICAL FIELDS SEARCHED (Int. Cl.³) |
|---|
| A 01 N 25/00 25/24 25/30 25/32 33/12 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 24-10-1980 | DECORTE |

European Patent Office

**EUROPEAN SEARCH REPORT**

0022666

Application number

EP 80 30 2353

-2-

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | Columbus, Ohio, USA<br>C.G. McWHORTER et al. "The use of surfactants to increase herbicidal activity",<br>& Proc. Northeast Weed Control Conf. 18, 6-13 (1964)<br>-- | | |
| X | US - A -3 493 361 (L.G. NICKEL et al )<br>* Claims 7,8 *<br>-- | 1-4, 7-10 | |
| | | | TECHNICAL FIELDS SEARCHED (Int. Cl. 3) |
| | US - A - 3 156 554 (N.E. TOLBERT)<br>* Column 1, line 67 to column 4, line 11 *<br>-- | 2,11, 12,16, 17 | |
| X | US - A - 3 592 910 (A.R. CLARK et al.)<br>* Column 10, line 38 to column 11, line 32; column 5, lines 58-63; examples *<br>-- | 1-5, 7-17 | |
| X | JOURNAL OF ECONOMIC ENTOMOLOGY, vol. 70, no. 6, 1977, College Park, Maryland, US<br>N.S TALEKAR et al. "Residual behavior of several insecticides on Chinese cabbage", pages 689-692.<br>* Page 689, right-hand column, lines 3,4 *<br>-- | 1,5,7, 8,10 | |
| X | CHEMICAL ABSTRACTS, vol. 83, no. 7, August 18, 1975.<br>./. | 1,5,7, 8,10 | |